# EUROPEAN PATENT SPECIFICATION

(11) **EP 4 595 335 B1**
(45) Date of publication and mention of the grant of the patent: **02.12.2026**
(21) Application number: 23797934.9
(22) Date of filing: 27.09.2023
(51) Int. Cl.: H04L 5/00, H04W 76/14, H04W 92/18

(54) **RESOURCE ALLOCATION FOR SIDELINK POSITIONING REFERENCE SIGNAL TRANSMISSIONS**
RESSOURCENZUWEISUNG FÜR SIDELINK-POSITIONIERUNGSREFERENZSIGNALÜBERTRAGUNGEN
ATTRIBUTION DE RESSOURCES POUR TRANSMISSIONS DE SIGNAL DE RÉFÉRENCE DE POSITIONNEMENT DE LIAISON LATÉRALE

(30) Priority: 04.11.2022 US 202263422490 P
(43) Date of publication of application: 06.08.2025
(60) Divisional application: 25225840.5 / 4 697 860
(73) Proprietor: Apple Inc., Cupertino CA 95014 (US)
(72) Inventor: YE, Chunxuan, Cupertino, California 95014 (US); ZHANG, Dawei, Cupertino, California 95014 (US); ZENG, Wei, Cupertino, California 95014 (US); HE, Hong, Cupertino, California 95014 (US); SUN, Haitong, Cupertino, California 95014 (US); BHAMRI, Ankit, Cupertino, California 95014 (US); OTERI, Oghenekome, Cupertino, California 95014 (US); YANG, Weidong, Cupertino, California 95014 (US); NIU, Huaning, Cupertino, California 95014 (US); YE, Sigen, Cupertino, California 95014 (US)
(74) Representative: Greengrass, Matthew James
(86) International application number: PCT/US2023/033787
(87) International publication number: WO 2024/096978

(56) References cited:
- WO-A1-2022/165835
- MODERATOR (QUALCOMM): "Moderator Summary #1 on potential solutions for SL positioning", vol. RAN WG1, no. e-Meeting; 20221010 - 20221019, 12 October 2022 (2022-10-12), XP052259808, Retrieved from the Internet <URL:https://ftp.3gpp.org/tsg_ran/WG1_RL1/TSGR1_110b-e/Docs/R1-2210341.zip R1-2210341.docx> [retrieved on 20221012]
- LG ELECTRONICS: "Discussion on potential solutions for SL positioning", vol. RAN WG1, no. Electronics; 20220822 - 20220826, 12 August 2022 (2022-08-12), XP052273785, Retrieved from the Internet <URL:https://ftp.3gpp.org/tsg_ran/WG1_RL1/TSGR1_110/Docs/R1-2205855.zip R1-2205855 Discussion on potential solutions for SL positioning.docx> [retrieved on 20220812]

## Description

### REFERENCE TO RELATED APPLICATIONS

This Application claims the benefit of U.S. Provisional Application No. 63/422,490, filed on November 2022.

### FIELD

This disclosure relates to wireless communication networks including techniques for allocating sidelink resources within wireless communication networks.

### BACKGROUND

Wireless communication networks may include user equipments (UEs), base stations, and/or other types of wireless devices capable of communicating with one another. During operation, the UEs may communicate with each other via sidelink (SL) signaling.

The following documents provide further background information that may be relevant as context for understanding the invention: LG ELECTRONICS: "Discussion on potential solutions for SL positioning", 3GPP Draft, R1-2205855, 12 August 2022; and WO 2022/165835 A1.

### BRIEF DESCRIPTION OF THE DRAWINGS

The present disclosure will be readily understood and enabled by the detailed description and accompanying figures of the drawings. Like reference numerals may designate like features and structural elements. Figures and corresponding descriptions are provided as non-limiting examples of aspects, implementations, etc., of the present disclosure, and references to "an" or "one" aspect, implementation, etc., may not necessarily refer to the same aspect, implementation, etc., and may mean at least one, one or more, etc.
Fig. 1 is a block diagram illustrating a wireless network including user equipments (UEs) configured to transmit/receive a sidelink positioning reference signal (SL-PRS) in accordance with some aspects of the present disclosure.
Figs. 2-4 are schematic diagrams illustrating signaling between a base station and two UEs to transmit/receive an SL-PRS in accordance with some aspects of the present disclosure.
Fig. 5A is a schematic diagram illustrating an SL-PRS resource index parameter in accordance with some aspects of the present disclosure.
Fig. 5B is a block diagram illustrating an SL-PRS resource parameter in accordance with some aspects of the present disclosure.
Fig. 6 is a schematic diagram illustrating signaling between a base station and two UEs to transmit/receive an SL-PRS in accordance with some aspects of the present disclosure.
Fig. 7 is a schematic diagram illustrating SL-PRS resource reservation within a resource pool in accordance with some aspects of the present disclosure.
Fig. 8 is a schematic diagram illustrating SL-PRS resource reservation within a slot in accordance with some aspects of the present disclosure.
Fig. 9 is a process flow for a UE to receive an SL-PRS in accordance with some aspects of the present disclosure.
Fig. 10 is a process flow for a UE to transmit an SL-PRS in accordance with some aspects of the present disclosure.
Fig. 11 is a block diagram illustrating signaling between multiple UEs to transmit/receive SL-PRS in accordance with some aspects of the present disclosure.
Fig. 12 is a process flow for a UE to transmit SL-PRS is accordance with some aspects of the present disclosure.
Fig. 13 is a logic flow for a UE to select SL-PRS resources in accordance with some aspects of the present disclosure.
Fig. 14 is a schematic diagram illustrating an SL-PRS resource selection process in accordance with some aspects of the present disclosure.
Fig. 15 is a logic flow for a UE to control channel congestion for SL-PRS in accordance with some aspects of the present disclosure.
Fig. 16 is a block diagram illustrating a device that can be employed to perform SL-PRS resource allocation in accordance with some aspects of the present disclosure.
Fig. 17 is a block diagram illustrating baseband circuitry that can be employed to perform SL-PRS resource allocation in accordance with some aspects of the present disclosure.

### DETAILED DESCRIPTION

The following detailed description refers to the accompanying drawings. Like reference numbers in different drawings may identify the same or similar features, elements, operations, etc. Additionally, the present disclosure is not limited to the following description as other implementations may be utilized, and structural or logical changes made, without departing from the scope of the present disclosure.

A user equipment (UE) may communicate with a base station using uplink (UL) and downlink (DL) signaling, or with other UEs using sidelink (SL) signaling. For communication between the UE and the base station, the base station may allocate time and frequency resources for UL and DL. For SL communication between UEs, however, the scheduling may be performed using multiple schemes. In scheme 1, the network (e.g., a base station) allocates resources and communicates the resource allocation to the UEs, and the UEs transmit/receive SL signals using the allocated resources. In scheme 2, at least one of the UEs participating in SL will select or reserve resources, without base station involvement in allocating the resources, from sidelink resource pools, which can be shared my multiple sidelink UEs, for communication with other UEs.

During SL operation, a UE may utilize information pertaining to the position/location of other UEs. For example, in applications such as vehicle-to-everything (V2X), one UE (e.g., a first vehicle) may utilize some positional data pertaining to other UEs (e.g., other vehicles) and perform operations accordingly. Positioning reference signal (PRS) is a signal used to determine positional data of a UE. Part of the continuing optimization of SL in wireless networks is to enable the use of a sidelink positioning reference signal (SL-PRS) to facilitate determining positional data of SL UEs.

Accordingly, the present disclosure relates to resource allocation techniques for SL-PRS in both scheme 1 and scheme 2, as well as mechanisms to reduce SL channel congestion and interference for SL-PRS. In some aspects, a base station may send control signals to the UEs to allocate resources for SL-PRS using dynamic scheduling, type 1 configured grant, or type 2 configured grant. The control signals may comprise information indicating the resources for SL-PRS. The indication may include a resource index for SL-PRS, or may indicate resources within a configured grant to be used for SL-PRS. The indication may be made in a new field of an existing DCI format, a new DCI format specifically for grant of SL-PRS, or a new parameter in RRC signaling (e.g., within a configured grant IE). Alternatively, the resources for SL-PRS are selected and reserved by a UE autonomously without involving base station scheduling. For example, a first UE may monitor SL channels and select optimal resources for SL-PRS from one or more legacy SL resource pools or dedicated SL-PRS resource pools associated with the legacy SL resource pools.

In some aspects, the first UE may monitor SL channels for sidelink control information (SCI). If the first UE detects that the SCI has a high corresponding reference signal received power (RSRP), then the UE may avoid using resources scheduled by the SCI. In some aspects, a UE may cease transmission of SL-PRS in order to reduce channel congestion. For example, if a channel busy ratio (CBR) is greater than a threshold value, or if the UE transmits more than a certain number of SL-PRS within a channel occupancy ratio (CR) window. Additional aspects and details of the disclosure are further described below with reference to the figures.

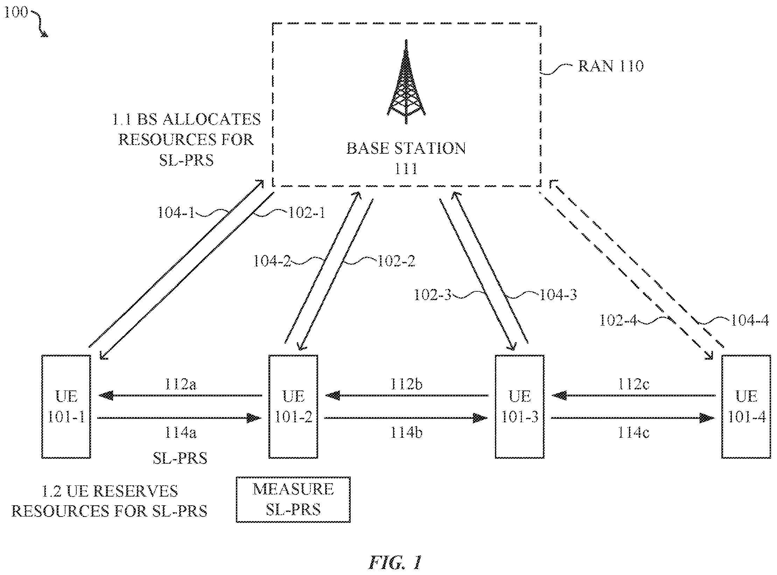

Fig. 1 illustrates an example architecture of a network system 100 in accordance with various aspects. The network system 100 includes a plurality of UEs 101-1, 101-2, 101-3, and 101-4 (referred to collectively as "UEs 101"). The UEs 101 can be configured to connect, for example, communicatively couple, with a RAN 110. The RAN 110 may comprise one or more base stations 111.

The UEs 101-1, 101-2, 101-3, and 101-4 may use connections (or channels) 104-1, 104-2, 104-3, and 104-4 for uplink (UL) respectively, and connections (or channels) 102-1, 102-2, 102-3, and 102-4 for downlink (DL) respectively. Furthermore, connections 112a, 112b, 112c and connections 114a, 114b, 114c may be used for sidelink (SL) communication between the UEs 101. For example, using connection 112a the UE 101-1 may receive data transmitted from the UE 101-2, using connection 112b the UE 101-2 may receive data transmitted from the UE 101-3, and using connection 112c the UE 101-3 may receive data transmitted from the UE 101-4. Similarly, using connection 114a the UE 101-2 may receive data transmitted from the UE 101-1, using connection 114b the UE 101-3 may receive data transmitted from the UE 101-2, and using connection 114c the UE 101-4 may receive data transmitted from the UE 101-3. Although not illustrated for simplicity, a UE of the UEs 101 may be capable of communicating with multiple UEs. For example, although a connection is not illustrated between the UE 101-1 and the UE 101-4, the UE 101-1 and the UE 101-4 may still communicate with each other via their own SL connection.

In some aspects, the UE 101-1 sends an SL-PRS to the UE 101-2. In turn, the UE 101-2 measures the SL-PRS. Based on the measurement of the SL-PRS, the UE 101-2 may obtain some positional data pertaining to a position of the UE 101-1 relative to the UE 101-2.

In some aspects, as illustrated by option 1.1, the base station 111 allocates time-frequency resources for the SL-PRS using scheme 1. For example, the base station 111 uses channel 102-1 to transmit a resource allocation to the UE 101-1 and channel 102-2 to transmit a resource allocation to the UE 101-2. The resource allocations for the UE 101-1 and the UE 101-2 allocate time-frequency resources for transmission/reception of the SL-PRS respectively. The UE 101-1 transmits the SL-PRS using connection 114a in the allocated time-frequency resources, and the UE 101-2 receives the SL-PRS using connection 114a in the allocated time-frequency resources.

In some aspects, as illustrated by option 1.2, a UE reserves time-frequency resources for the SL-PRS using scheme 2. For example, the UE 101-1 may select time-frequency resources for SL-PRS autonomously without communicating with the base station 111. The time-frequency resources may be selected from one or more SL resource pools or a dedicated SL-PRS resource pool that may be associated with the one or more SL resource pools. The UE 101-1 may reserve the selected time-frequency resources by sending a resource reservation indicating the resources to the UE 101-2 via connection 114a. The resource reservation may be made in SCI or similar signaling. The SL resource pools contain a plurality of time-frequency resources that usable for SL. Techniques of selecting resources for SL-PRS from SL resource pools are described in more detail further in the present disclosure.

In some aspects, one or more UEs of the UEs 101 are not in coverage. In one example, the UE 101-4 is not in range of the base station 111. The UE 101-4, however, may still communicate with other UEs via SL. The UE 101-4 may participate in scheme 2 SL, since the base station 111 is not required for SL scheme 2. Alternatively, the UE 101-4 may participate in scheme 1 SL by communicating with another UE that is in coverage. For example, if the UE 101-3 is in coverage, the base station 111 may send the resources allocation to the UE 101-3, and the UE 101-3 may "forward" or "relay" the resource allocation to the UE 101-4.

The UEs 101 may comprise any mobile or non-mobile computing device, such as consumer electronics devices, cellular phones, smartphones, feature phones, tablet computers, wearable computer devices, personal digital assistants (PDAs), pagers, wireless handsets, desktop computers, laptop computers, in-vehicle infotainment (IVI), in-car entertainment (ICE) devices, an Instrument Cluster (IC), head-up display (HUD) devices, onboard diagnostic (OBD) devices, dashtop mobile equipment (DME), mobile data terminals (MDTs), Electronic Engine Management System (EEMS), electronic/engine control units (ECUs), electronic/engine control modules (ECMs), embedded systems, microcontrollers, control modules, engine management systems (EMS), networked or "smart" appliances, Machine Type Communication (MTC) devices, Machine to Machine (M2M), Internet of Things (IoT) devices, and/or the like.

In some aspects, the RAN 110 can be a next generation (NG) RAN or a 5G RAN, an evolved-UMTS Terrestrial RAN (E-UTRAN), or a legacy RAN, such as a UTRAN or GERAN. As used herein, the term "NG RAN" or the like can refer to a RAN 110 that operates in an NR or 5G system, and the term "E-UTRAN" or the like can refer to a RAN 110 that operates in an LTE or 4G system.

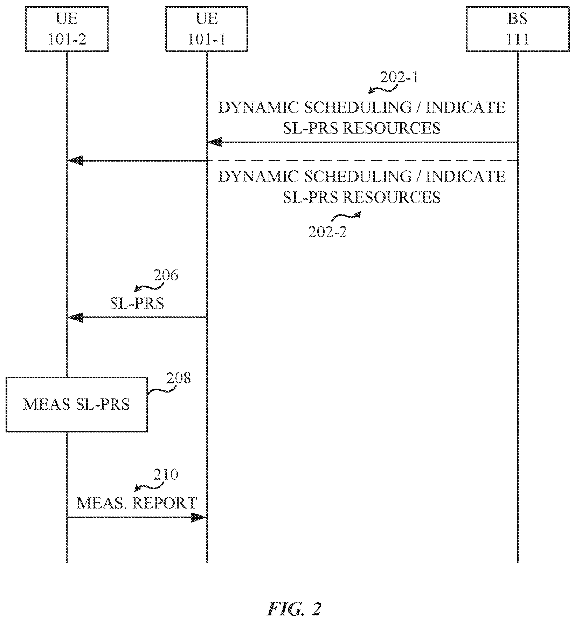

Figs. 2-4 illustrate signaling between a base station 111 and two UEs 101-1, 101-2 to transmit/receive an SL-PRS in accordance with some aspects. In some aspects, the UEs 101-1, 101-2 receive control information from the base station 111 to allocate time-frequency resources for an SL-PRS transmission. At act 206, an SL-PRS is transmitted from a UE 101-1 to a UE 101-2. The UE 101-2 measures the SL-PRS at act 208, and sends a measurement report to the UE 101-1 at act 210. The measurement report may contain or be based on a result of the performed SL-PRS measurement. As shown by Figs. 2-4 respectively and described in details below, the SL-PRS may be scheduled in various ways according to different aspects of the disclosure, and the control information may be communicated via SL dynamic scheduling, SL type 1 configured grant scheduling, or SL type 2 configured grant scheduling.

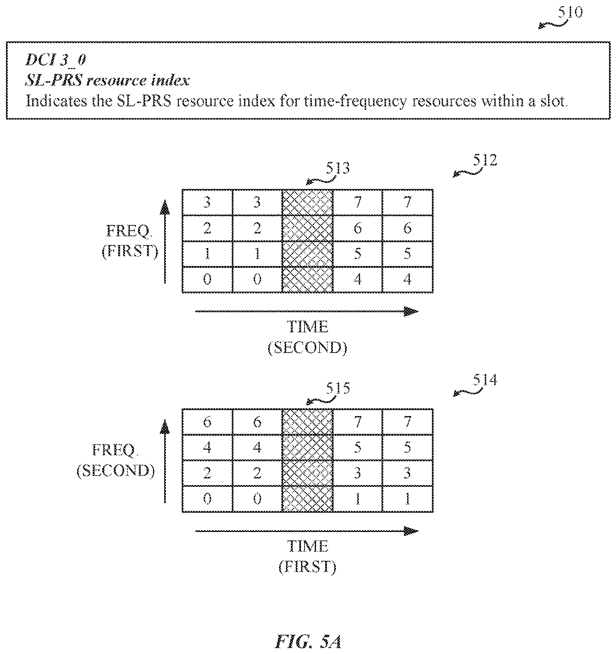

As shown by Fig. 2, in some aspects, the SL-PRS is scheduled using SL dynamic scheduling. In some aspects, at act 202-1, the base station 111 sends a resource allocation to the UE 101-1 indicating time-frequency resources for transmission the SL-PRS. In some aspects, at act 202-2, the base station 111 sends a resource allocation to the UE 101-2 indicating time-frequency resources for reception of the SL-PRS. The resource allocations may be included in control information such as downlink control information (DCI). The time-frequency resources may be indicated, for example, in a field ***SL-PRS resource index*** of the DCI, as described with reference to Fig. 5A. The resource allocations may be transmitted on a physical downlink control channel (PDCCH). In some alternative aspects, the UE 101-2 is not in coverage of the base station 111. In this scenario, at act 202-2, the UE 101-1 forwards the resource allocation to the UE 101-2 via SL, allowing the UE 101-2 to receive the resource allocation without communicating with the base station 111. At act 206, the UE 101-1 transmits, and the UE 101-2 receives, the SL-PRS using the allocated time-frequency resources.

In some aspects, the DCI is a DCI format 3_0. In some aspects, the DCI is in a new DCI format (different from DCI 3_0 and DCI 3_1) dedicated for grant of SL-PRS, which may be referred to as DCI format 3_X, wherein X is an integral index number such as 2, 3, 4, etc. Some aspects of further details of the DCI format will be described below associated with Fig. 5A as an example.

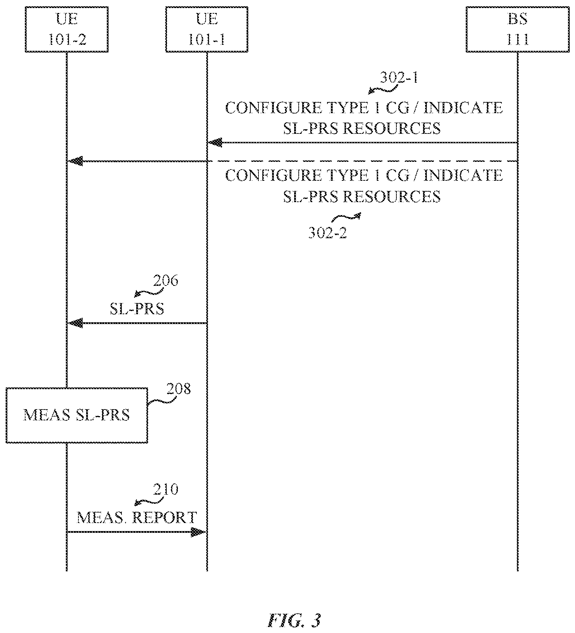

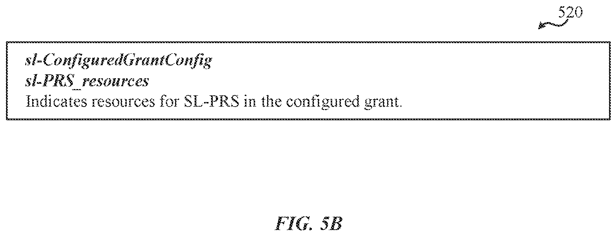

As shown by Fig. 3, in some aspects, the SL-PRS is scheduled using SL type 1 configured grant. In some aspects, at act 302-1, the base station 111 sends a configured grant configuration to the UE 101-1 to configure the type 1 configured grant. In some aspects, at act 302-2, the base station 111 additionally sends a configured grant configuration to the UE 101-2 to configure the type 1 configured grant. The configured grant configurations may be included in high layer communication such as radio resource control (RRC) signaling. Alternatively, at act 302-2, the UE 101-1 may forward the configured grant configuration to the UE 101-2 (e.g., if the UE 101-2 is not in coverage of the base station 111). In some aspects, the configured grant configurations further indicate which resources in the grant are to be used for SL-PRS. The resources may be indicated, for example, in a parameter ***sl-PRS***_***resources***, as described with reference to Fig. 5B. The type 1 configured grant is activated upon reception of the configured grant configuration. The UE 101-1 may transmit SL-PRS to the UE 101-2 using the resources indicated in the grant without the need for additional signaling (e.g., a grant activation command).

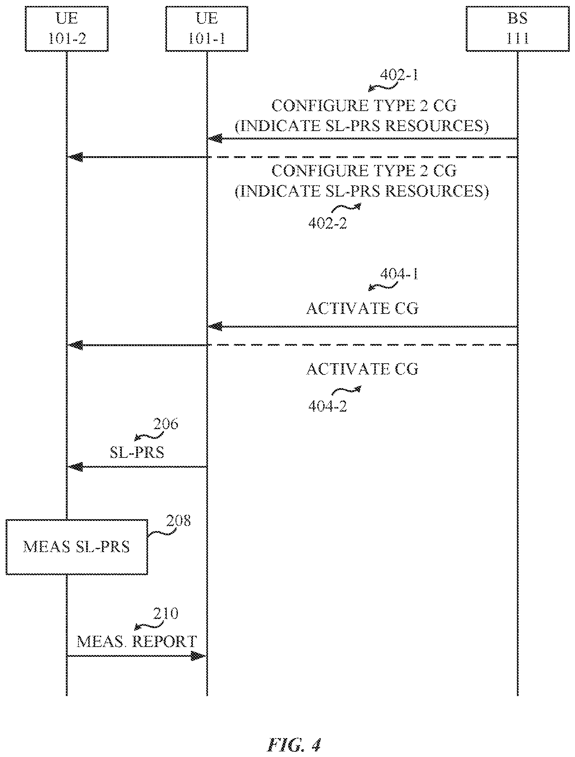

As shown by Fig. 4, in some aspects, the SL-PRS is scheduled using SL type 2 configured grant. In some aspects, at act 402-1, the base station 111 sends a configured grant configuration to the UE 101-1 to configure the type 2 configured grant. In some aspects, at act 402-2, the base station 111 additionally sends a configured grant configuration to the UE 101-2 to configure the type 2 configured grant. In some aspects, the configured grant configurations are included in high layer communication such as RRC signaling. Upon reception of the configured grant configuration, the type 2 configured grant is configured, but is not activated until an activation command is received. At act 404-1, the base station 111 activates the type 2 configured grant.

In some aspects, the resources for SL-PRS are indicated in the type 2 configured grant configuration, for example, in a similar manner as described with reference to Fig. 3.

In some alternative aspects, the type 2 configured grant configuration includes a periodicity of the SL-PRS, and the activation command indicates the resources for SL-PRS (e.g., an SL-PRS resource index). For example, the type 2 configured grant configuration configures the periodicity of the SL-PRS, and the activation command specifies the resources for SL-PRS to be used according to the periodicity.

In some aspects, the UE 101-1 transmits, and the UE 101-2 receives, the SL-PRS using the indicated SL-PRS resources.

In some aspects, the indication and/or activation are included in DCI, such as DCI format 3_0. In some aspects, the DCI is a new DCI format (different from DCI 3_0 and DCI 3_1) dedicated for grant of SL-PRS, which may be referred to as DCI format 3_X, wherein X is an integral index number such as 2, 3, 4, etc. Some aspects of further details of the DCI format will be described below associated with Fig. 5A as an example. In some alternative aspects, as shown by acts 402-2 and 404-2 respectively, the UE 101-1 may forward the configured grant configuration and the SL-PRS resource indication/configured grant activation to the UE 101-2 (e.g., if the UE 101-2 is not in coverage of the base station 111).

Figs. 5A-5B illustrate an SL-PRS resource index parameter 510 and an SL-PRS resource parameter 520 respectively in accordance with some aspects of the present disclosure.

As shown in Fig. 5A, in some aspects, the SL-PRS resource index parameter 510 is used to indicate time-frequency resources for SL-PRS within a slot. The SL-PRS resource index parameter 510 may be included as a parameter ***SL-PRS resource index*** in DCI (e.g., DCI 3_0 or DCI 3_X from acts 404-1, 404-2).

In some aspects, a number of bits of the SL-PRS resource index parameter 510 depends on a total number of resource units in a slot. In some aspects, a maximum value of the index is equal to the total number of resource units in a slot, and the number of bits of the index is the minimum number of bits required to represent the maximum value of the index in binary. As an example, if a maximum value of the index is 25, then the index may be represented by 5 bits, since 2⁵ = 32. A resource unit may comprise one or more resource elements which may be used for SL-PRS transmission. In some aspects, the SL-PRS resource index parameter 510 may point to an index of a specific resource unit.

In some aspects, the SL-PRS resource index parameter 510 is included in DCI format 3_0 and replaces one or more of: a hybrid automatic repeat request (HARQ) process number, a new data indicator, a physical sidelink feedback channel (PSFCH) to HARQ feedback timing indicator, a physical uplink control channel (PUCCH) resource indicator, or a counter sidelink assignment index. Since no SL data transmission is granted together with SL-PRS and these fields are used for SL data transmission, their bits may be reused for the SL-PRS resource index parameter 510. In some aspects, the DCI format 3_0 uses a new radio network temporary identifier (RNTI) different from sidelink radio network temporary identifier (SL-RNTI) and sidelink configured scheduling radio network temporary identifier (SL-CS-RNTI). The new RNTI could be used to provide an indication that the DCI is specifically for SL-PRS resource allocation.

In some aspects, as shown in table 512, the SL-PRS resource index parameter 510 follows a frequency first and time second indexing scheme. The index is illustrated as increasing first in the frequency domain, and second in the time domain. In some alternative aspects, as shown in table 514, the SL-PRS resource index parameter 510 follows a time first and frequency second indexing scheme. The index is illustrated as increasing first in the time domain, and second in the frequency domain. In some aspects, the time-frequency resources in the tables 512, 514 represent time-frequency resources in a slot, and the time-frequency resources are divided into resource elements. In some aspects, a resource unit comprises two resource elements. Each SL-PRS is transmitted using one resource unit (e.g., using two resource elements), and each of the indices is assigned to two resource elements accordingly.

In some aspects, some resource elements 513, 515 of the tables 512, 514 respectively, are not assigned an index. The resource elements 513, 515 without an assigned index may occur, for example, during a gap symbol where SL-PRS is not transmitted.

As shown in Fig. 5B, in some aspects, the SL-PRS resource parameter 520 is included in a configured grant configuration (e.g., configured grant configuration from acts 302-1, 302-2). The SL-PRS resource parameter 520 may be included as, for example, a parameter ***sl***_***PRS*_*resources***. In some aspects, the parameter ***sl*_*PRS*_*resources*** is included in an information element (IE) ***sl-ConfiguredGrantConfig*** in RRC signaling. The SL-PRS resource parameter 520 may indicate the time-frequency resources for SL-PRS in the configured grant. The time-frequency resources for SL-PRS in the grant may be indicated, for example, using a resource index as previously described.

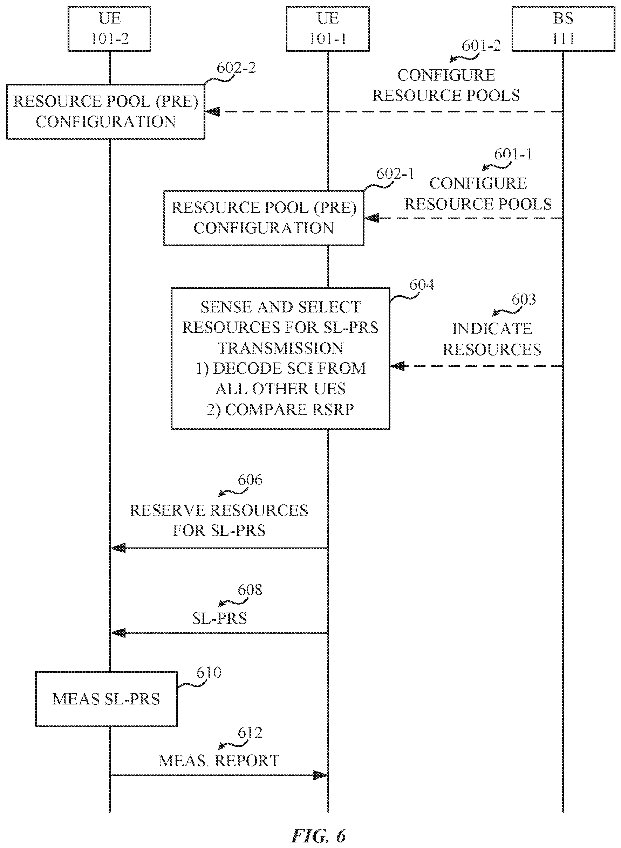

Fig. 6 illustrates signaling between a base station 111 and two UEs 101-1, 101-2 to transmit/receive an SL-PRS in accordance with some aspects. In some aspects, the UEs 101-1, 101-2 receive resource pool information indicating at least one resource pool for SL-PRS. The resource pool information may be included in a resource pool configuration (e.g., from the base station 111) or in a resource pool pre-configuration (e.g., specified by standards and stored in the UE or another storage medium without communicating with the base station). The UE 101-1 selects time-frequency resources from the at least one resource pool and sends a resource reservation to the UE 101-2 to reserve the selected time-frequency resources for one or more SL-PRS transmissions. The UE 101-1 transmits, and the UE 101-2 receives, the one or more SL-PRS, and the UE 101-2 measures the one or more SL-PRS.

In some aspects, resource pools are pre-configured at the UEs 101-1, 101-2 at acts 602-1, 602-2 respectively. The resource pools may include a dedicated SL-PRS resource pool and/or an associated legacy SL resource pool. In some aspects, the dedicated SL-PRS resource pool includes slots reserved for SL-PRS from an existing SL resource pool. The dedicated SL-PRS resource pool may have an associated legacy SL resource pool, and the reserved SL-PRS slots may be from the legacy SL resource pool. In some alternative aspects, as illustrated by acts 601-1 and 601-2, the resource pools are configured by signaling from the base station 111.

In some aspects, at act 604, the UE 101-1 selects resources for SL-PRS transmission. In some aspects, the selection of resources includes decoding SCI from other UEs in SL and comparing RSRP associated with the SCI. The UE 101-1 may choose to not use certain resources if an SCI was received from another UE reserving the resources and the SCI had a high associated RSRP. The SCI indicates the resources have been reserved by another UE, and the high associated RSRP indicates that interference is likely if the UE 101-1 attempts to use the resources. In some alternative aspects, the resources are selected based on an indication of resources from the base station, as shown by act 603.

In some aspects, at act 606, the UE 101-1 sends a resource reservation to the UE 101-2 reserving the selected resources from act 604. In some aspects, the resource reservation may be included in an SCI stage 2 format, an SCI stage 1 format, or a medium access control (MAC) control element (CE).

In some aspects, the resource reservation indicates an index of a resource pool the resource reservation is for. In some aspects, the resource reservation is made on the associated SL legacy sidelink resource pool. In this example, the resource reservation includes an index of the associated legacy resource pool. In some alternative aspects, the resource reservation is made on the dedicated SL-PRS resource pool, and the resource reservation includes an index of the dedicated SL-PRS resource pool.

In some aspects, the resource reservation includes an SL-PRS resource index indicating the time-frequency resource within a slot. The SL-PRS resource index may be the SL-PRS resource index as previously described (e.g., the SL-PRS resource index parameter 510).

In some aspects, the resource reservation indicates a slot for the SL-PRS transmission. The slot indication could be used in combination with the SL-PRS resource index. For example, the slot indication indicates a slot, and the SL-PRS resource index indicates resources within the slot.

In some aspects, the resource reservation indicates a periodicity of the resource reservation, and the resource is periodically reserved according to the indicated periodicity. In some aspects, the resource reservation is activated after a wait time. The wait time may be configurable, or a pre-determined value. The SL-PRS may be transmitted in the first slot reserved for SL-PRS after the wait time.

At act 608, the UE 101-1 transmits the SL-PRS in the reserved resources. The UE 101-2 receives the SL-PRS in the reserved resources, and at act 610, the UE 101-2 measures the SL-PRS. After measuring the SL-PRS, the UE 101-2 sends a measurement report including or based on a result of the SL-PRS measurement to the UE 101-1 at act 612.

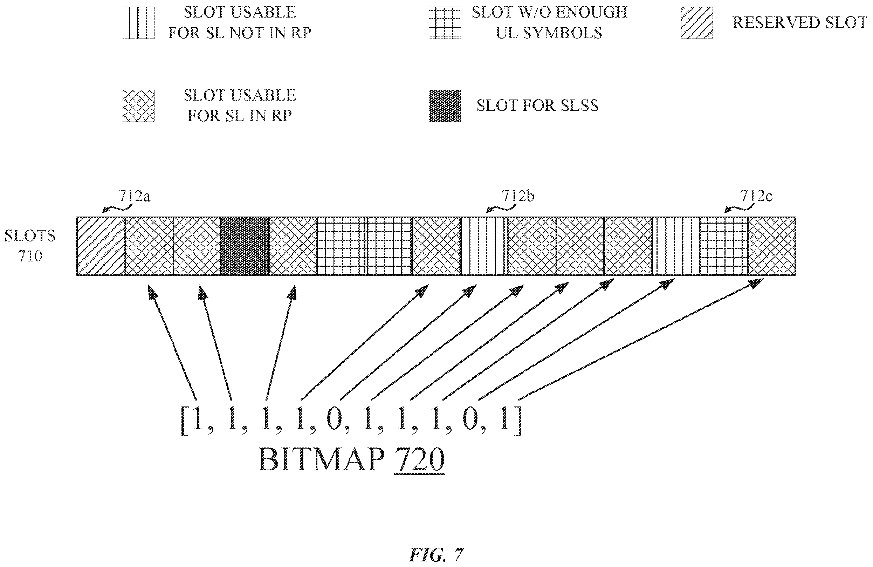

Fig. 7 illustrates SL-PRS resource reservation within a resource pool in accordance with some aspects. A plurality of slots usable for SL may be referenced by a bitmap 720 to indicate whether corresponding slots are in the resource pool. Other slots not used for SL data communication, such as reserved slots or slots without enough symbols for UL, may also be reserved for SL-PRS.

For example, as shown in Fig. 7, the bitmap 720 may indicate '0' for slots usable for SL not in the resource pool and '1' for slots usable for SL in the resource pool. In some aspects, one or more of slots 712a, 712b, 712c can be reserved for SL-PRS transmission. The slots 712a, 712b, 712c may be indicated, for example, in the resource reservation (e.g., from act 606 of Fig. 6). In some aspects, the slots 712a, 712b, 712c are reserved from a legacy SL resource pool.

In some aspects, slots 710 include reserved slots, slots without enough symbols for UL, slots for sidelink synchronization signal (SLSS), slots usable for SL in the resource pool, and slots usable for SL not in the resource pool, as shown by the corresponding patterns. In some aspects, the slots 712a, 712b, 712c are selected from one or more of: reserved slots, slots usable for SL but not in the resource pool, or slots without enough symbols for UL. In some aspects, the slots without enough symbols for UL may be used for SL-PRS transmission due to the SL-PRS taking less time to transmit than UL (e.g., less symbols are required to transmit SL-PRS than UL). In some aspects, the resource pool has a resource pool periodicity. The resource pool periodicity may be, for example, 10240 ms.

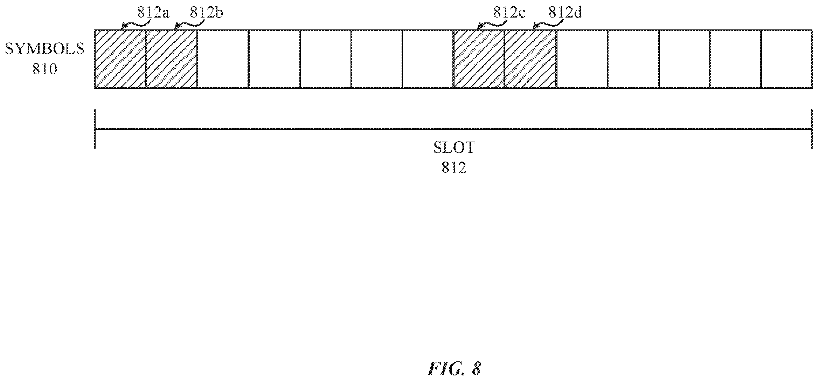

Fig. 8 illustrates SL-PRS resource reservation within a slot 812 in accordance with some aspects. In some aspects, the slot 812 represents one of the reserved slots 712a, 712b, 712c from Fig. 7. The slot 812 comprises 14 orthogonal frequency division multiplexing (OFDM) symbols 810. Symbols 812a, 812b, 812c, 812d are reserved for SL-PRS transmission. In some aspects, the symbols 812a, 812b are reserved for a first SL-PRS transmission, and the symbols 812c, 812d are reserved for a second SL-PRS transmission.

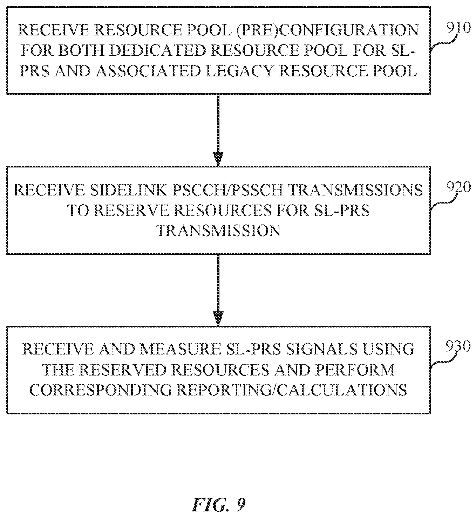

Fig. 9 is a process flow for a UE to receive an SL-PRS in accordance with some aspects. At act 910, in some aspects, the UE receives a resource pool configuration (e.g., from a base station) for both a dedicated SL-PRS resource pool and an associated legacy resource pool. Alternatively the resource pool configuration may be pre-configured. At act 920, the UE receives SL PSCCH and/or PSSCH transmissions to reserve time-frequency resources for the SL-PRS. At act 930, the UE receives and measures the SL-PRS using the reserved time-frequency resources and performs the corresponding calculations/reporting. The process flow illustrated by Fig. 9 may implement techniques described throughout the present disclosure, for example, as described with reference to Figs. 1-8.

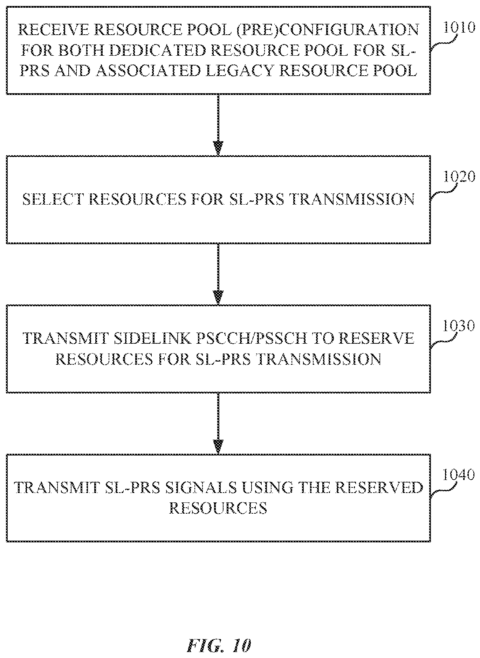

Fig. 10 is a process flow for a UE to transmit an SL-PRS in accordance with some aspects. At act 1010, in some aspects, the UE receives a resource pool configuration (e.g., from a base station) for both a dedicated SL-PRS resource pool and an associated legacy resource pool. Alternatively the resource pool configuration may be pre-configured. At act 1020, the UE selects time-frequency resources for the SL-PRS. At act 1030, the UE transmits SL PSCCH and/or PSSCH transmissions to reserve the time-frequency resources for the SL-PRS. At act 1040, the UE transmits the SL-PRS using the reserved time-frequency resources.

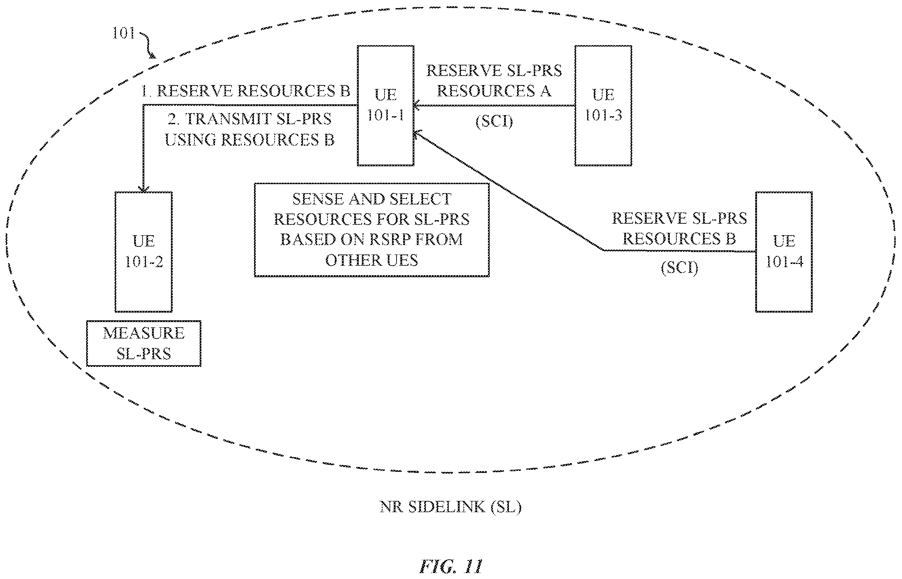

Fig. 11 illustrates signaling between multiple UEs 101 to transmit/receive SL-PRS in accordance with some aspects. In some aspects, a UE 101-1 prepares to transmit SL-PRS to a UE 101-2. The UE 101-1 senses SCI from a UE 101-3 reserving resources A for SL-PRS and senses SCI from a UE 101-4 reserving resources B for SL-PRS. The UE 101-1 receives the SCI, and the UE 101-1 may perform RSRP measurements associated with the SCI (e.g., on reference signals associated with the SCI). The UE 101-1 then selects resources for SL-PRS. In some aspects, the UE 101-1 may exclude resources from the selection if the resources were reserved by an SCI with a high associated RSRP. By excluding the resources with a high corresponding RSRP, the UE 101-1 may avoid transmitting using resources that may experience high interference. In this scenario, the SCI reserving resources B has a lower associated RSRP since the UE 101-4 is further from the UE 101-1, and the SCI reserving resources A has a higher associated RSRP since the UE 101-3 is closer to the UE 101-1. In response, the UE 101-1 excludes resources A since the SCI reserving resources A has a high associated RSRP, and selects resources B for transmission. The UE 101-1 transmits a resource reservation to the UE 101-2 to reserve resources B, and transmits the SL-PRS to the UE 101-2 using resources B.

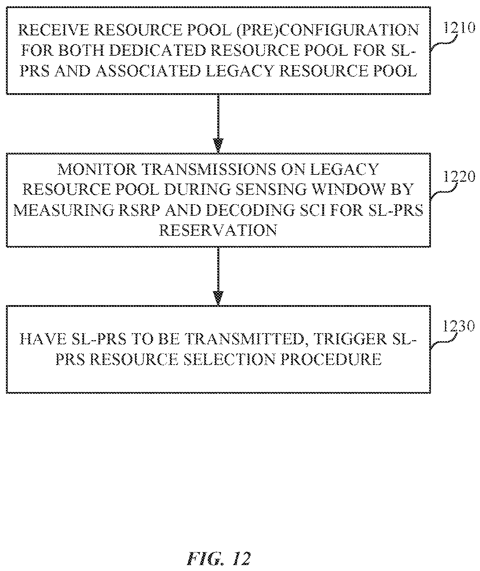

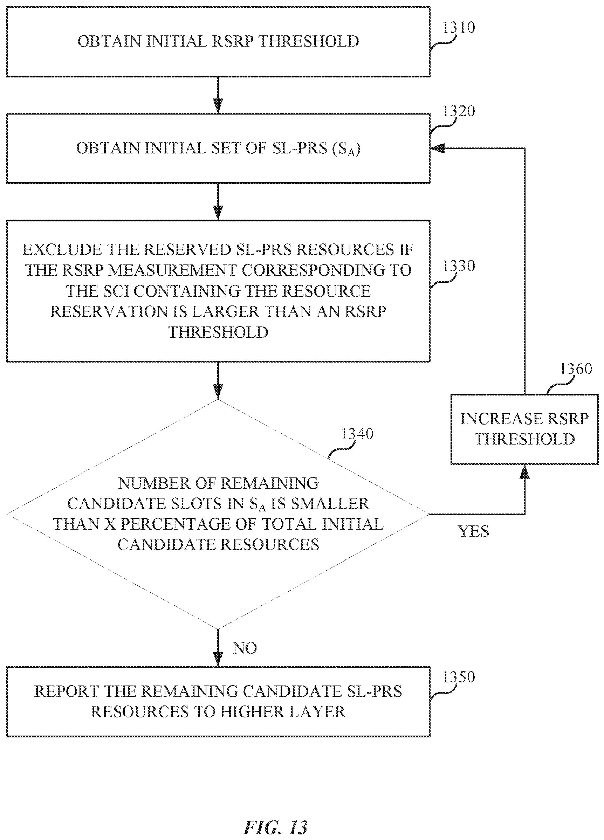

Fig. 12 is a process flow for a UE to transmit SL-PRS is accordance with some aspects of the present disclosure. In some aspects, at act 1210, the UE receives a resource pool configuration (e.g., from a base station) for both a dedicated SL-PRS resource pool and an associated legacy resource pool. In some alternative aspects, the resource pool configuration is pre-configured. At act 1220, the UE monitors transmissions on the legacy resource pool during a sensing window and decodes SCI reserving SL-PRS. The SCI may be received from various other UEs, and the receiving UE may measure RSRPs associated with the SCI, as described with reference to Fig. 11. At act 1230, the UE has SL-PRS to be transmitted, and an SL-PRS resource selection procedure is triggered. The SL-PRS resource selection procedure will now be described with reference to Fig. 13.

Fig. 13 is a logic flow for a UE to select SL-PRS resources in accordance with some aspects of the present disclosure. In some aspects, the steps illustrated by Fig. 13 are performed by the UE during a selection window. At act 1310, the UE obtains an initial RSRP threshold. At act 1320, the UE obtains an initial set of candidate resources "S_{A}" for SL-PRS transmission.

In some aspects, at act 1330 the UE excludes resources from the initial candidate resources S_{A} to form a set of adjusted (e.g., remaining) candidate resources. The resources are excluded if the UE received SCI reserving the resources during the sensing window, and if an RSRP associated with the SCI is greater than the RSRP threshold. At act 1340, if the set of adjusted candidate resources is smaller than a threshold percentage "X" of the initial candidate resources S_{A}, then the RSRP threshold is increased by an RSRP adjustment value at act 1360 and the process is repeated. Otherwise, the adjusted candidate resources are reported to a higher layer (e.g., MAC layer) at act 1350.

In some aspects, the initial RSRP threshold is configured or pre-configured on a per resource pool basis. In some additional or alternative aspects, the initial RSRP threshold is based on a priority of transmit data and a data priority associated with the reservation of one or more SL-PRS.

In some aspects, the initial RSRP threshold is based on a priority ***prio***_***TX*** of transmit data. For example, if the transmit data has a high priority, a higher initial RSRP threshold may be used. The higher RSRP threshold results in less candidate resources being excluded from selection, thus, more adjusted candidate resources are available. Conversely, if the transmit data has a low priority, a lower initial RSRP threshold may be used.

In some additional or alternative aspects, the initial RSRP threshold is based on a priority ***prio***_***RX*** of SCI received from another UE. The UE may receive SCI from multiple other UEs reserving resources for SL-PRS. For example, if the UE received SCI from another UE (e.g., during the sensing window) reserving resources for SL-PRS with a high priority, then the UE may use a lower RSRP threshold initially. The UE respects the high priority SL-PRS by using the lower RSRP threshold. By using the lower RSRP threshold, the associated RSRP for the SL-PRS with the high priority is more likely to be greater than the lower RSRP threshold. Consequently, the high priority resources are more likely to be excluded from resource selection, thereby reducing interference with the high priority SL-PRS. Alternatively, if the UE only received SCI from other UEs reserving resources for SL-PRS with low priorities, then the UE may choose to use a higher initial RSRP threshold accordingly.

In some aspects, the threshold percentage value "X" is included in resource pool information (e.g., from act 1210 of Fig. 12). In some aspects, the threshold percentage value is indicated on a per resource pool basis. The threshold percentage value may be either configured, or pre-configured.

In some aspects, a length of the sensing window is configured or pre-configured per resource pool. The sensing window may be the same or different from a sensing window length of an associated legacy resource pool. In some aspects, the sensing window length is set from a previous SL-PRS slot. For example, a reference SL-PRS slot may be a lower bound of the sensing window, where any sensing results before the reference SL-PRS slot are not retained.

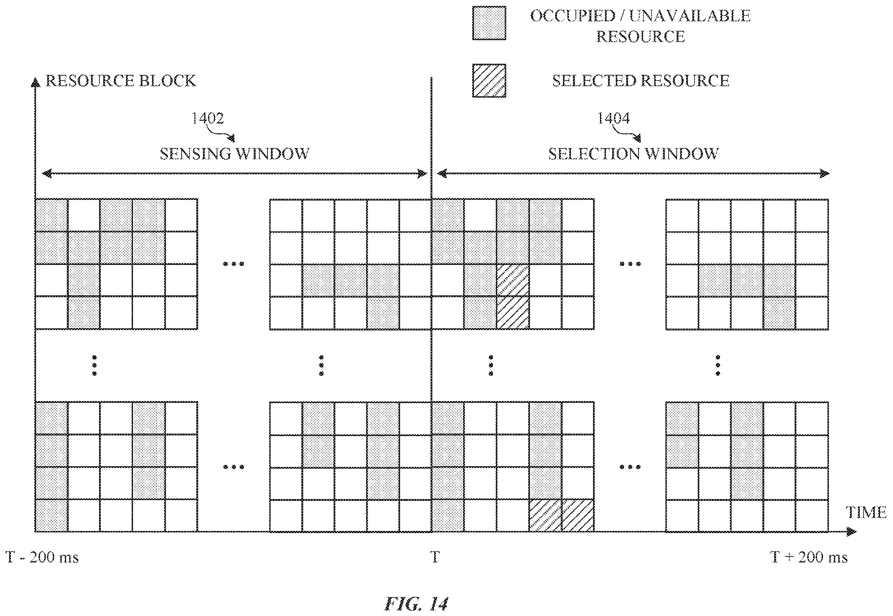

Fig. 14 illustrates an SL-PRS resource selection process in accordance with some aspects. A sensing window 1402 is illustrated which may be, for example, the sensing window described with reference to Fig. 12. During the sensing window, the UE senses SCI and measures associated RSRP (e.g., on reference signals associated with the SCI). If the RSRP associated with the SCI is greater than an RSRP threshold, then the resources scheduled by the SCI may be considered as occupied/unavailable. During a selection window 1404, the UE selects available resources for SL-PRS transmission. The selection window 1404 may be the selection window described with reference to Fig. 13.

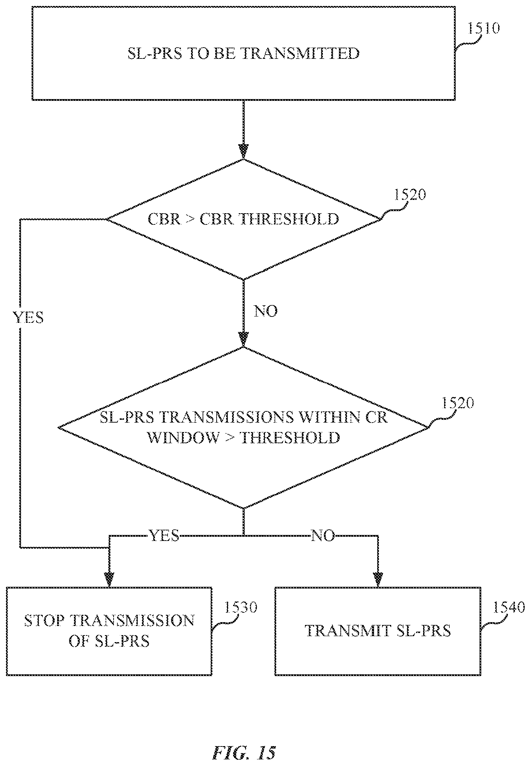

Fig. 15 is a logic flow for a UE to control channel congestion for SL-PRS in accordance with some aspects. In some aspects, the UE will assess one or more channel conditions to determine if SL-PRS is causing channel congestion. Based on the assessment, the UE may reduce or even stop transmission of SL-PRS for higher prioritized data or signal transmission.

In some aspects, at act 1510, the UE has SL-PRS to be transmitted. At act 1520, the UE checks if a CBR is greater than a CBR threshold value. The CBR may be measured at slot n, and is the portion of SL-PRS resources in the resource pool whose SL received signal strength indicator (RSSI) exceeds an RSSI threshold over a CBR measurement window [n-A, n-1]. The RSSI threshold may be configured or pre-configured, and A depends on higher layer configuration. If the CBR is greater than the CBR threshold value, then the UE stops transmission of SL-PRS at act 1530 in order to reduce channel congestion.

In some aspects, at act 1520, the UE checks if a number of SL-PRS transmissions within a CR window is greater than a threshold number of transmissions. If the number of SL-PRS transmissions is greater than the threshold number of transmissions, then the UE stops transmission of SL-PRS at act 1530. Otherwise, the UE transmits SL-PRS at act 1540.

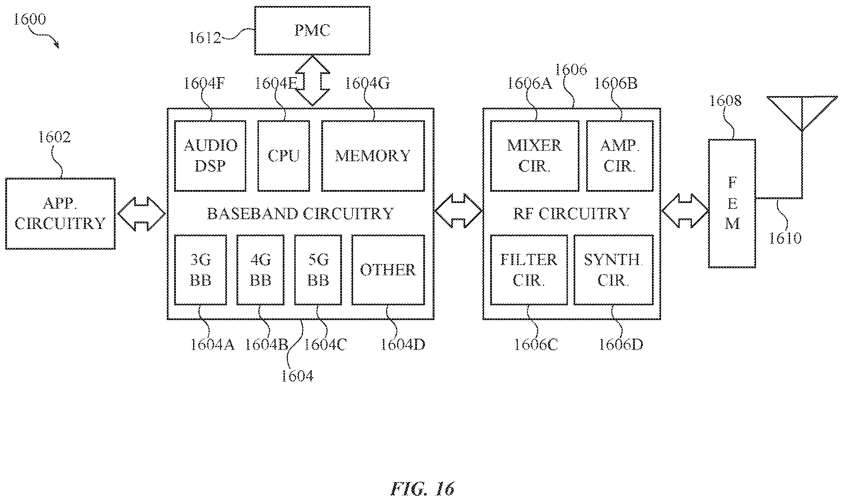

Fig. 16 is a diagram illustrating example components of a device 1600 that can be employed in accordance with some aspects of the present disclosure. In some aspects, the device 1600 can include application circuitry 1602, baseband circuitry 1604, Radio Frequency (RF) circuitry 1606, front-end module (FEM) circuitry 1608, one or more antennas 1610, and power management circuitry (PMC) 1612 coupled together at least as shown. The components of the illustrated device 1600 can be included in a UE or a RAN node, such as the UE 101 or the base station 111 as described, for example, with reference to Figs. 1-4 and Fig. 6. The UE 101 and the base station 111 may be configured to perform SL-PRS resource allocation as described throughout the present disclosure. In some implementations, the device 1600 can include fewer elements (e.g., a RAN node may not utilize application circuitry 1602 and instead include a processor/controller to process IP data received from a CN, which may be a 5GC or an Evolved Packet Core (EPC)). In some implementations, the device 1600 can include additional elements such as, for example, memory/storage, display, camera, sensor (including one or more temperature sensors, such as a single temperature sensor, a plurality of temperature sensors at different locations in device 1600, etc.), or input/output (I/O) interface. In other implementations, the components described below can be included in more than one device (e.g., said circuitries can be separately included in more than one device for Cloud-RAN (C-RAN) implementations).

The application circuitry 1602 can include one or more application processors. For example, the application circuitry 1602 can include circuitry such as, but not limited to, one or more single-core or multi-core processors. The processor(s) can include any combination of general-purpose processors and dedicated processors (e.g., graphics processors, application processors, etc.). The processors can be coupled with or can include memory/storage and can be configured to execute instructions stored in the memory/storage to enable various applications or operating systems to run on the device 1600. In some implementations, processors of application circuitry 1602 can process IP data packets received from an EPC.

The baseband circuitry 1604 can include circuitry such as, but not limited to, one or more single-core or multi-core processors. The baseband circuitry 1604 can include one or more baseband processors or control logic to process baseband signals received from a receive signal path of the RF circuitry 1606 and to generate baseband signals for a transmit signal path of the RF circuitry 1606. Baseband circuitry 1604 can interface with the application circuitry 1602 for generation and processing of the baseband signals and for controlling operations of the RF circuitry 1606. For example, in some implementations, the baseband circuitry 1604 can include a 3G baseband processor 1604A, a 4G baseband processor 1604B, a 5G baseband processor 1604C, or other baseband processor(s) 1604D for other existing generations, generations in development or to be developed in the future (e.g., 2G, 6G, etc.).

The baseband circuitry 1604 (e.g., one or more of baseband processors 1604A-D) can handle various radio control functions that enable communication with one or more radio networks via the RF circuitry 1606. In other implementations, some or all of the functionality of baseband processors 1604A-D can be included in modules stored in the memory 1604G and executed via a Central Processing Unit (CPU) 1604E. The radio control functions can include, but are not limited to, signal modulation/demodulation, encoding/decoding, radio frequency shifting, etc. In some implementations, the baseband circuitry 1604 can include one or more audio digital signal processor(s) (DSP) 1604F.

RF circuitry 1606 can enable communication with wireless networks using modulated electromagnetic radiation through a non-solid medium. In various implementations, the RF circuitry 1606 can include switches, filters, amplifiers, etc. to facilitate the communication with the wireless network. RF circuitry 1606 can include a receive signal path which can include circuitry to down-convert RF signals received from the FEM circuitry 1608 and provide baseband signals to the baseband circuitry 1604. RF circuitry 1606 can also include a transmit signal path which can include circuitry to up-convert baseband signals provided by the baseband circuitry 1604 and provide RF output signals to the FEM circuitry 1608 for transmission.

In some implementations, the receive signal path of the RF circuitry 1606 can include mixer circuitry 1606A, amplifier circuitry 1606B and filter circuitry 1606C. In some implementations, the transmit signal path of the RF circuitry 1606 can include filter circuitry 1606C and mixer circuitry 1606A. RF circuitry 1606 can also include synthesizer circuitry 1606D for synthesizing a frequency for use by the mixer circuitry 1606A of the receive signal path and the transmit signal path.

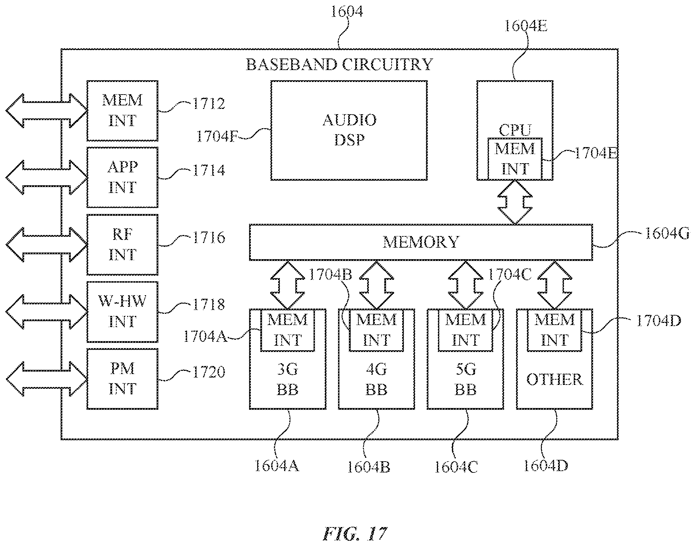

Fig. 17 illustrates a diagram illustrating example interfaces of baseband circuitry that can be employed in accordance with some aspects. As discussed above, the baseband circuitry 1604 of Fig. 16 can comprise processors 1604A-1604E and a memory 1604G utilized by said processors. Each of the processors 1604A-1604E can include a memory interface, 1704A-1704E, respectively, to send/receive data to/from the memory 1604G. The baseband circuitry 1604, or the one or more baseband processors or control logic of the baseband circuitry 1604, may stand alone as the UE 101 or the base station 111 and perform signaling and operations as described throughout the present disclosure.

The baseband circuitry 1604 can further include one or more interfaces to communicatively couple to other circuitries/devices, such as a memory interface 1712 (e.g., an interface to send/receive data to/from memory external to the baseband circuitry 1604), an application circuitry interface 1714 (e.g., an interface to send/receive data to/from the application circuitry 1602 of Fig. 16), an RF circuitry interface 1716 (e.g., an interface to send/receive data to/from RF circuitry 1606 of Fig. 16), a wireless hardware connectivity interface 1718 (e.g., an interface to send/receive data to/from Near Field Communication (NFC) components, Bluetooth^{®} components (e.g., Bluetooth^{®} Low Energy), Wi-Fi^{®} components, and other communication components), and a power management interface 1720 (e.g., an interface to send/receive power or control signals to/from the PMC 1612).

Examples herein can include subject matter such as a method, means for performing acts or blocks of the method, at least one machine-readable medium including executable instructions that, when performed by a machine (e.g., a processor (e.g., processor, etc.) with memory, an application-specific integrated circuit (ASIC), a field programmable gate array (FPGA), or the like) cause the machine to perform acts of the method or of an apparatus or system for concurrent communication using multiple communication technologies according to implementations and examples described.

The above description of illustrated examples, implementations, aspects, etc., of the subject disclosure, including what is described in the Abstract, is not intended to be exhaustive or to limit the disclosed aspects to the precise forms disclosed. While specific examples, implementations, aspects, etc., are described herein for illustrative purposes, various modifications are possible that are considered within the scope of such examples, implementations, aspects, etc., as those skilled in the relevant art can recognize.

In this regard, while the disclosed subject matter has been described in connection with various examples, implementations, aspects, etc., and corresponding Figures, where applicable, it is to be understood that other similar aspects can be used or modifications and additions can be made to the disclosed subject matter for performing the same, similar, alternative, or substitute function of the subject matter without deviating therefrom. Therefore, the disclosed subject matter should not be limited to any single example, implementation, or aspect described herein, but rather should be construed in breadth and scope in accordance with the appended claims below.

In particular regard to the various functions performed by the above described components or structures (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations. In addition, while a particular feature may have been disclosed with respect to only one of several implementations, such feature may be combined with one or more other features of the other implementations as may be desired and advantageous for any given or particular application.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

## Claims

1. A baseband processor for a User Equipment, UE, the baseband processor configured to, when executing instructions stored in a memory, cause the UE to:
receive, from a base station, a downlink control information, DCI, format 3_0 including an index for a sidelink positioning reference signal, SL-PRS, resource within a slot to allocate time-frequency resources for transmission of an SL-PRS within the slot, wherein the index for the SL-PRS resource indicates the time-frequency resources within the slot using a frequency first and time second indexing scheme, wherein the index for the SL-PRS resource replaces one or more SL data transmission fields within the DCI format 3_0; and
provide the SL-PRS for transmission to a second UE using the allocated time-frequency resources within the slot based on the index for the SL-PRS resource.

2. The baseband processor of claim 1, wherein the one or more SL data transmission fields within the DCI format 3_0 include one or more of: a hybrid automatic repeat request, HARQ, process number field, a new data indicator field, a physical sidelink feedback channel, PSFCH, to HARQ feedback timing indicator field, a physical uplink control channel, PUCCH, resource indicator field, or a counter sidelink assignment index field.

3. The baseband processor of any preceding claim, wherein the baseband processor is further configured to cause the UE to:
receive a radio resource control, RRC, message from the base station before receiving the DCI format 3_0, to configure type 2 configured grant scheduling, wherein the DCI format 3_0 activates the type 2 configured grant scheduling.

4. The baseband processor of any preceding claim, wherein the index for the SL-PRS resource within the slot is included in an SL-PRS resource index field in the DCI format 3_0, and wherein a number of bits of the SL-PRS resource index field is based on a total number of SL-PRS resources in a slot.

5. The baseband processor of any preceding claim, wherein the DCI format 3_0 includes a new radio network temporary identifier, RNTI, indicating that the DCI format 3_0 is for a SL-PRS allocation, wherein the new RNTI is different from sidelink radio network temporary identifier, SL-RNTI, and sidelink configured scheduling radio network temporary identifier, SL-CS-RNTI.

6. The baseband processor of any preceding claim, wherein the second UE receives control information from the base station, the control information indicating time-frequency resources for receiving the SL-PRS.

7. The baseband processor of any of claims 1 to 5, wherein the second UE receives control information from the UE, the control information indicating time-frequency resources for receiving the SL-PRS.

8. A User Equipment, UE, comprising:
a memory;
a transceiver; and
one or more processors coupled to the memory and the transceiver, wherein the one or more processors are configured to execute instructions stored in the memory to cause the UE to:
receive, via the transceiver, resource pool information indicating a resource pool for sidelink, SL, communications;
receive, via the transceiver, a resource reservation from a second UE including a SL positioning reference signal, SL-PRS, resource index to reserve time-frequency resources of the resource pool for reception of one or more SL-PRSs within a slot, wherein the SL-PRS resource index indicates the time-frequency resources within the slot using a frequency first and time second indexing scheme;
receive, via the transceiver, the one or more SL-PRSs from the second UE using the reserved time-frequency resources; and
measure the one or more SL-PRSs.

9. The UE of claim 8, wherein the resource pool is a dedicated SL-PRS resource pool, and wherein the resource pool information further indicates a legacy sidelink resource pool associated with the dedicated SL-PRS resource pool.

10. The UE of any of claims 8-9, wherein the resource reservation is in one of: a sidelink control information, SCI, stage 2 format, a SCI stage 1 format, or a medium access control, MAC, control element, CE.

11. The UE of any of claims 8-10, , wherein the resource reservation indicates an index of the resource pool.

12. The UE of any of claims 8-11, wherein the resource reservation indicates a periodicity of the resource reservation.

13. The UE of any of claims 8-12, wherein the resource reservation is active after a wait time, wherein the wait time is either configurable or a pre-determined value.

## Patentansprüche

1. Ein Basisbandprozessor für ein Benutzergerät, UE, wobei der Basisbandprozessor so konfiguriert ist, dass er beim Ausführen von in einem Speicher gespeicherten Anweisungen das UE veranlasst zum:
Empfangen, von einer Basisstation, eines Downlink-Steuerinformations-, DCI-, Formats 3_0, das einen Index für eine Sidelink-Positionierungsreferenzsignal-, SL-PRS-, Ressource innerhalb eines Schlitzes zum Zuweisen von Zeit-Frequenz-Ressourcen zur Übertragung einer SL-PRS innerhalb des Schlitzes beinhaltet, wobei der Index für die SL-PRS-Ressource die Zeit-Frequenz-Ressourcen innerhalb des Schlitzes unter Verwendung eines Frequenz-zuerst und Zeit-danach-Indexierungsschemas (frequency first and time second indexing scheme) angibt, wobei der Index für die SL-PRS-Ressource ein oder mehrere SL-Datenübertragungsfelder innerhalb des DCI-Formats 3_0 ersetzt; und Bereitstellen der SL-PRS zur Übertragung an ein zweites UE unter Verwendung der zugewiesenen Zeit-Frequenz-Ressourcen innerhalb des Schlitzes basierend auf dem Index für die SL-PRS-Ressource.

2. Der Basisbandprozessor nach Anspruch 1, wobei das eine oder die mehreren SL-Datenübertragungsfelder innerhalb des DCI-Formats 3_0 eines oder mehrere der Folgenden beinhalten: ein Hybrid-Automatic-Repeat-Request-, HARQ-, Prozessnummernfeld, ein Neue-Daten-Indikatorfeld, ein Physical-Sidelink-Feedback-Channel-, PSFCH-, zu HARQ-Feedback-Timing-Indikatorfeld, ein Physical-Uplink-Control-Channel-, PUCCH-, Ressourcenindikatorfeld oder ein Zähler-Sidelink-Zuweisungsindexfeld.

3. Der Basisbandprozessor nach einem der vorhergehenden Ansprüche, wobei der Basisbandprozessor ferner so konfiguriert ist, dass er das UE veranlasst zum:
Empfangen einer Radio-Resource-Control-, RRC-, Nachricht von der Basisstation vor dem Empfangen des DCI-Formats 3_0, um Type-2-konfiguriertes Grant-Scheduling zu konfigurieren, wobei das DCI-Format 3_0 das Type-2-konfigurierte Grant-Scheduling aktiviert.

4. Der Basisbandprozessor nach einem der vorhergehenden Ansprüche, wobei der Index für die SL-PRS-Ressource innerhalb des Schlitzes in einem SL-PRS-Ressourcenindexfeld im DCI-Format 3_0 enthalten ist, und wobei eine Anzahl von Bits des SL-PRS-Ressourcenindexfelds auf einer Gesamtanzahl von SL-PRS-Ressourcen in einem Schlitz basiert.

5. Der Basisbandprozessor nach einem der vorhergehenden Ansprüche, wobei das DCI-Format 3_0 eine neue temporäre Funknetzkennung, RNTI, beinhaltet, die angibt, dass das DCI-Format 3_0 für eine SL-PRS-Zuweisung ist, wobei sich die neue RNTI von der temporären Sidelink-Funknetzkennung, SL-RNTI, und der temporären Sidelink-Scheduling-Funknetzkennung, SL-CS-RNTI, unterscheidet.

6. Der Basisbandprozessor nach einem der vorhergehenden Ansprüche, wobei das zweite UE Steuerinformation von der Basisstation empfängt, wobei die Steuerinformation Zeit-Frequenz-Ressourcen zum Empfangen der SL-PRS angibt.

7. Der Basisbandprozessor nach einem der Ansprüche 1 bis 5, wobei das zweite UE Steuerinformation vom UE empfängt, wobei die Steuerinformation Zeit-Frequenz-Ressourcen zum Empfangen der SL-PRS angibt.

8. Ein Benutzergerät, UE, umfassend:
einen Speicher;
einen Transceiver; und
einen oder mehrere Prozessoren, die mit dem Speicher und dem Transceiver gekoppelt sind, wobei der eine oder die mehreren Prozessoren so konfiguriert sind, dass sie im Speicher gespeicherte Anweisungen ausführen, um das UE zu veranlassen zum:
Empfangen, über den Transceiver, von Ressourcenpoolinformation, die einen Ressourcenpool für Sidelink-, SL-, Kommunikationen angibt;
Empfangen, über den Transceiver, einer Ressourcenreservierung von einem zweiten UE, die einen SL-Positionierungsreferenzsignal-, SL-PRS-, Ressourcenindex zum Reservieren von Zeit-Frequenz-Ressourcen des Ressourcenpools zum Empfang einer oder mehrerer SL-PRS innerhalb eines Schlitzes beinhaltet, wobei der SL-PRS-Ressourcenindex die Zeit-Frequenz-Ressourcen innerhalb des Schlitzes unter Verwendung eines Frequenz-zuerst und Zeit-danach-Indexierungsschemas angibt;
Empfangen, über den Transceiver, der einen oder mehreren SL-PRS vom zweiten UE unter Verwendung der reservierten Zeit-Frequenz-Ressourcen; und
Messen der einen oder mehreren SL-PRS.

9. Das UE nach Anspruch 8, wobei der Ressourcenpool ein dedizierter SL-PRS-Ressourcenpool ist, und wobei die Ressourcenpoolinformation ferner einen Legacy-Sidelink-Ressourcenpool angibt, der mit dem dedizierten SL-PRS-Ressourcenpool assoziiert ist.

10. Das UE nach einem der Ansprüche 8-9, wobei die Ressourcenreservierung in einem von Folgendem ist: einem Sidelink-Steuerinformations-, SCI-, Stufe-2-Format, einem SCI-Stufe-1-Format oder einem Medium-Access-Control-, MAC-, Steuerelement, CE.

11. Das UE nach einem der Ansprüche 8-10, wobei die Ressourcenreservierung einen Index des Ressourcenpools angibt.

12. Das UE nach einem der Ansprüche 8-11, wobei die Ressourcenreservierung eine Periodizität der Ressourcenreservierung angibt.

13. Das UE nach einem der Ansprüche 8-12, wobei die Ressourcenreservierung nach einer Wartezeit aktiv ist, wobei die Wartezeit entweder konfigurierbar oder ein vorbestimmter Wert ist.

## Revendications

1. Un processeur de bande de base pour un équipement utilisateur, UE, le processeur de bande de base étant configuré pour, lors de l'exécution d'instructions stockées dans une mémoire, amener l'UE à :
recevoir, à partir d'une station de base, un format 3_0 d'information de contrôle de liaison descendante, DCI, incluant un indice pour une ressource de signal de référence de positionnement sidelink, SL-PRS, à l'intérieur d'un slot pour attribuer des ressources de temps-fréquence pour la transmission d'un SL-PRS à l'intérieur du slot, dans lequel l'indice pour la ressource SL-PRS indique les ressources de temps-fréquence à l'intérieur du slot en utilisant un schéma d'indexation de fréquence en premier et de temps en second, dans lequel l'indice pour la ressource SL-PRS remplace un ou plusieurs champs de transmission de données SL au sein du format 3_0 DCI ; et
délivrer le SL-PRS pour la transmission à un second UE en utilisant les ressources de temps-fréquence attribuées à l'intérieur du slot sur la base de l'indice de la ressource SL-PRS.

2. Le processeur de bande de base selon la revendication 1, dans lequel les un ou plusieurs champs de transmission de données SL au sein du format 3_0 DCI incluent un ou plusieurs parmi : un champ de numéro de processus de requête de répétition automatique hybride, HARQ, un champ d'indicateur de nouvelles données, un champ d'indicateur de séquencement de canal physique de retour sidelink, PSFCH, à retour HARQ, un champ d'indicateur de ressource de canal physique de contrôle de liaison montante, PUCCH, ou un champ d'indice d'attribution sidelink de compteur.

3. Le processeur de bande de base selon l'une des revendications précédentes, dans lequel le processeur de bande de base est en outre configuré pour amener l'UE à :
recevoir un message de contrôle de ressource radio, RRC, à partir de la station de base avant de recevoir le format 3_0 DCI, pour configurer la planification d'autorisation configurée de type 2, dans lequel le format 3_0 DCI active la planification d'autorisation configurée de type 2.

4. Le processeur de bande de base selon l'une des revendications précédentes, dans lequel l'indice pour la ressource SL-PRS à l'intérieur du slot est inclus dans un champ d'indice de ressource SL-PRS au format 3_0 DCI, et dans lequel un nombre de bits du champ d'indice de ressource SL-PRS est basé sur un nombre total de ressources SL-PRS dans un slot.

5. Le processeur de bande de base selon l'une des revendications précédentes, dans lequel le format 3_0 DCI inclut un nouvel identifiant temporaire de réseau radio, RNTI, indiquant que le format 3_0 DCI est pour une attribution SL-PRS, dans lequel le nouveau RNTI est différent de l'identifiant temporaire de réseau radio sidelink, SL-RNTI, et de l'identifiant temporaire de réseau radio sidelink de planification configurée, SL-CS-RNTI.

6. Le processeur de bande de base selon l'une des revendications précédentes, dans lequel le second UE reçoit des informations de contrôle à partir de la station de base, les informations de contrôle indiquant des ressources de temps-fréquence pour la réception du SL-PRS.

7. Le processeur de bande de base selon l'une des revendications 1 à 5, dans lequel le second UE reçoit des informations de contrôle à partir de l'UE, les informations de contrôle indiquant des ressources de temps-fréquence pour la réception du SL-PRS.

8. Un équipement utilisateur, UE, comprenant :
une mémoire ;
un émetteur-récepteur ; et
un ou plusieurs processeurs couplés à la mémoire et à l'émetteur-récepteur, dans lequel les un ou plusieurs processeurs sont configurés pour exécuter des instructions stockées dans la mémoire pour amener l'UE à :
recevoir, via l'émetteur-récepteur, des informations de pool de ressources indiquant un pool de ressources pour des communications sidelink, SL ;
recevoir, via l'émetteur-récepteur, une réservation de ressource provenant d'un second UE, incluant un indice de ressource de signal de référence de positionnement SL, SL-PRS, pour réserver des ressources de temps-fréquence du pool de ressources pour la réception d'un ou plusieurs SL-PRS à l'intérieur d'un slot, dans lequel l'indice de ressource SL-PRS indique les ressources de temps-fréquence à l'intérieur du slot en utilisant un schéma d'indexation de fréquence en premier et de temps en second ;
recevoir, via l'émetteur-récepteur, les un ou plusieurs SL-PRS à partir du second UE en utilisant les ressources de temps-fréquence réservées ; et
mesurer les un ou plusieurs SL-PRS.

9. L'UE selon la revendication 8,
dans lequel le pool de ressources est un pool de ressources SL-PRS dédié, et dans lequel les informations de pool de ressources indiquent en outre un pool de ressources sidelink hérité associé au pool de ressources SL-PRS dédié.

10. L'UE selon l'une des revendications 8 à 9,
dans lequel la réservation de ressources est dans l'un parmi : un format de niveau 2 d'information de contrôle sidelink, SCI, un format de niveau 1 de SCI, ou élément de contrôle, CE, de contrôle d'accès au support, MAC.

11. L'UE selon l'une des revendications 8 à 10,
dans lequel la réservation de ressources indique un indice du pool de ressources.

12. L'UE selon l'une des revendications 8 à 11,
dans lequel la réservation de ressources indique une périodicité de la réservation de ressources.

13. L'UE selon l'une des revendications 8 à 12,
dans lequel la réservation de ressources est active après un temps d'attente, dans lequel le temps d'attente est soit configurable, soit une valeur prédéterminée.
